# EUROPÄISCHE PATENTSCHRIFT

(11) **EP 3 192 129 B1**
(45) Veröffentlichungstag und Bekanntmachung des Hinweises auf die Patenterteilung: **20.02.2019**
(21) Anmeldenummer: 15760126.1
(22) Anmeldetag: 31.08.2015
(51) Int. Cl.: H01R 9/24, H01R 9/26, H01R 13/46, G09F 3/06, B29C 47/06, G09F 3/16, G09F 7/06, G09F 3/20, G09F 3/00, G09F 3/02

(54) **MARKIERERSTREIFEN UND VERFAHREN DAFÜR**
MARKING STRIP AND METHOD THEREOF
BANDES DE MARQUAGE ET MÉTHODE ASSOCIÉE

(30) Priorität: 10.09.2014 DE 102014113075; 08.06.2015 DE 102015109020
(43) Veröffentlichungstag der Anmeldung: 19.07.2017
(73) Patentinhaber: Weidmüller Interface GmbH & Co. KG, 32758 Detmold (DE)
(72) Erfinder: SPEITH, Markus, 33102 Paderborn (DE); WIENEKE, Andreas, 32657 Lemgo (DE); SCHREIBER, Dietmar, 33175 Bad Lippspringe (DE); RIEKE, Thorsten, 32760 Detmold (DE); BETT, Thorsten, 33161 Hövelhof (DE); SCHNEIDER, Maximilian, 33039 Nieheim (DE); ROSIN, Maximilian, 32756 Detmold (DE); HÜLSMANN, René, 32108 Bad Salzuflen (DE)
(74) Vertreter: Specht, Peter
(86) Internationale Anmeldenummer: PCT/EP2015/069813
(87) Internationale Veröffentlichungsnummer: WO 2016/037874

(56) Entgegenhaltungen:
- WO-A1-2010/108673
- DE-U- 6 927 061

## Beschreibung

Die Erfindung betrifft einen Markiererstreifen und ein Verfahren zur Herstellung eines Markiererstreifens.

Eine gattungsgemäßer Markiererstreifen ist aus der DE 69 27 061 U bekannt.

Aus der DE 20 2007 012 606 U1 ist es zudem bekannt, im Zweikomponenten-Spritzgießverfahren Markierer für elektrische Leitungen zu schaffen, bei denen eine Markierplatte aus einem härteren Kunststoff besteht als an der Markierplatte angeordnete Federelemente zum Befestigen des Markierers auf dem Kabel. Dieses offenbart auch die WO 2010/108673 A1, wobei diese Schrift auch eine Variante offenbart, bei der an dem Markierer für elektrische Leitungen eine Markiererplatte aus einem weicheren Kunststoff vorzusehen, wobei diese Platte durch einen Kunststoff aus einem härteren Material stabilisiert wird.

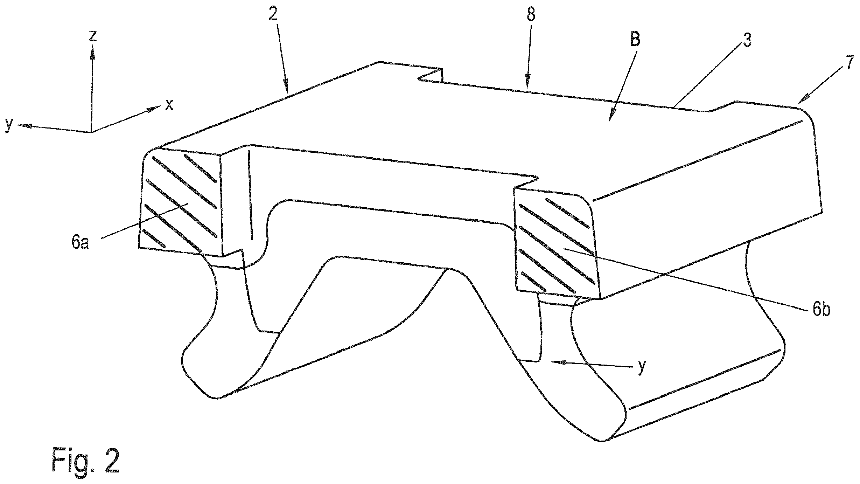

Sind auf einer Montagebasis eine Mehrzahl oder eine Vielzahl von elektrischen Geräten wie Reihenklemmen aneinandergereiht, die jeweils eine Rastkontur, insbesondere eine Rastausnehmung, aufweisen, vereinfacht es den Markiervorgang, wenn anstelle einer Mehrzahl von vollständig vereinzelten Markiererelementen, wie sie in Fig. 2 dargestellt sind, streifenförmig miteinander verbundene Markiererelemente eingesetzt werden. Beispielsweise zum Markieren einer Reihenklemmenanordnung auf einer Tragschiene ist es dann lediglich notwendig, den Markiererstreifen über den Bereich der aneinander gereihten Rastkonturen der Reihenklemmen zu legen und dann von oben so auf die einzelnen Markiererelemente zu drücken, dass ein sicheres Verrasten der Markiererelemente an den Geräten, insbesondere den Reihenklemmen erfolgt. Dabei soll der Markiererstreifen bzw. sollen dessen Markiererelemente insbesondere für ein Bedrucken in der Thermotransfertechnik und deren Randbedingungen geeignet sein.

Zur Herstellung derartiger Markiererstreifen werden zum Beispiel Spritzgießverfahren genutzt, wobei Streifen mit einer definierten Länge von beispielsweise acht Markiererelementen hergestellt werden, die dann zusammengefügt werden, um eine Rolle mit einem langen Markiererstreifen bestücken zu können, von dem dann wiederum Markiererstreifen mit einer gewünschten Menge von Markierelementen abgelängt werden können. Es gestaltet sich dabei insbesondere als schwierig, zuverlässig und ohne Versatz im Raster aus den einzelnen spritzgegossenen Streifen einen übergeordneten "Endlosstreifen" zum Aufrollen auf eine Rolle zu fertigen.

Die Erfindung hat die Aufgabe, den gattungsgemäßen Markiererstreifen weiterzuentwickeln.

Die Erfindung löst diese Aufgabe durch den Gegenstand des Anspruchs 1 und das Verfahren des Anspruchs 17.

Vorteilhafte Ausgestaltungen sind in den Unteransprüchen angegeben.

Danach besteht der Markiererstreifen aus wenigstens zwei verschiedenen Kunststoffmaterialien verschiedener Härte, die Rastkontur jedes Markiererelementes besteht aus dem härteren Kunststoffmaterial, und die Markierplatte besteht zumindest im Bereich des Beschriftungsfeldes aus dem weicheren Kunststoffmaterial und/oder der Verbindungsbereich zwischen den Markierelementen besteht jeweils ganz oder teilweise aus dem weicheren Kunststoffmaterial.

Es ist besonders vorteilhaft, dass die Rastkontur jedes Markiererelementes aus dem härteren Kunststoffmaterial besteht, um sie gut und sicher an dem jeweiligen elektrischen Gerät verrasten zu können. Es ist zudem vorteilhaft, wenn die Markierplatte zumindest im Bereich des Beschriftungsfeldes aus dem weicheren Kunststoffmaterial besteht. Denn so ist sie präziser zu bedrucken. Das weichere Material erleichtert die automatische Anpassung an den Druckkopf und ist auch für den Druckkopf schonender als ein härteres Material. Zudem werden Einfallstellen verhindert und es ist denkbar, die bedruckbaren Bereiche länger auszulegen, da sie im Bereich des Druckkopfes weniger leicht verkanten und/oder nicht von der Heizleiste abheben. Es ist ferner möglich, ein besonders gut bedruckbares Material auszuwählen, ohne dass darauf Rücksicht genommen werden muss, dass das Material für die Rastfunktion hart genug ist, welche die Raststege bzw. Rastfüße ausbilden.

Es ist alternativ oder ergänzend ebenfalls besonders vorteilhaft, wenn der Verbindungsbereich zwischen den Markierelementen jeweils aus dem weicheren Kunststoffbereich besteht. Denn dies ermöglicht, durch entsprechendes Ziehen oder Stauchen dieses Bereiches am Montageort kleinere Toleranzen, die durch den Anreihvorgang der elektrischen Geräte entstehen, jeweils auszugleichen. Zudem wird das Aufwickeln auf einer Rolle erleichtert.

Vorzugsweise ist der Markiererstreifen zunächst im Extrusionsverfahren hergestellt. und wird dann weiterbearbeitet.

Nach einer bevorzugten Variante der Erfindung besteht der Markiererstreifen aus wenigstens zwei Kunststoffmaterialien, und zwar vorzugsweise aus zwei Kunststoffen verschiedener Härte. Gefertigt wird er vorzugsweise in einem Mehrkomponenten, insbesondere einem Zwei-Komponenten-Co-Extrusionsverfahren.

Derart ist es möglich, jeweils für die Bereiche der Markierplatte mit dem Beschriftungsfeld einerseits und die Rastkontur andererseits Kunststoffe verschiedener Härte einzusetzen. Das Zwei-Komponenten-Co-Extrusionsverfahren ist ein zuverlässiger und kostengünstiger Prozess, insbesondere im Vergleich zum Spritzgießen. Durch das Extrudieren kann einfach ein Endlosstreifen zum Aufwickeln auf eine Rolle gefertigt werden. Durch das Verwenden der Extrusion, insbesondere Coextrusion, können dabei die Markiererstreifen bzw. dessen Markiererelemente insbesondere für ein Bedrucken in der Thermotransfertechnik genutzt werden.

Es ist ferner vorteilhaft, wenn der Verbindungsbereich zwischen den Markierelementen jeweils aus wenigstens einem oder mehreren Verbindungssteg(en) besteht und wenn im Verbindungsbereich zwischen benachbarten Markierelementen wenigstens ein Loch, insbesondere ein Langloch ausgebildet ist, das die Markiererelemente in Aufrastrichtung senkrecht zu ihrer Anreihrichtung durchsetzt. Mit dem Loch lässt sich die Elastizität des Verbindungsbereiches gezielt erhöhen bzw. einstellen. Zudem ist das jeweilige Loch gut als Sensierungsmittel für einen Sensor eines Druckers zum Auslösen oder Stoppen eines Bedruckens nutzbar.

Besonders vorteilhaft ist das Loch zwischen den beiden Verbindungsstegen ausgebildet. Derart lässt es sich besonders gut sensieren.

Es ist weiter vorteilhaft, wenn in dem Bereich unterhalb der Verbindungsstege jeweils zwischen zwei zueinander benachbarten Markiererelementen ein Spalt ausgebildet ist, der die Raststege benachbarter Geräte voneinander trennt. Die Verbindungsbereiche verbinden die Markierplatten oberhalb dieser Spalte miteinander.

In einer bevorzugten Ausführungsform weist die Markierplatte des Markiererstreifens keine Löcher und/oder Randausnehmungen auf. Dadurch sind geräteübergreifende Beschriftungen einfach und vorteilhaft realisierbar.

In einer anderen Ausführungsform ist die Markierplatte des Markiererstreifens aus einem helleren Kunststoffmaterial hergestellt als die Rastkontur des Markiererstreifens. Dadurch kann einfach und vorteilhaft eine Sensierung für einen Sensor eines Druckers zum Auslösen oder Stoppen eines Bedruckens -also zur Sensierung eines gerätespezifischen Rastermaßes- ohne eine Indexlochung erfolgen. Dies ist Insbesondere dann vorteilhaft möglich, wenn die Markierplatte aus einem weißen Kunststoffmaterial hergestellt ist und die Rastkontur aus einem schwarzen Kunststoffmaterial hergestellt ist.

In einer anderen Ausführungsform ist die Markierplatte des Markiererstreifens aus einem zumindest transluzenten Kunststoffmaterial hergestellt. Dadurch kann einfach und vorteilhaft eine Sensierung für einen Sensor eines Druckers zum Auslösen oder Stoppen eines Bedruckens -also zur Sensierung eines gerätespezifischen Rastermaßes- ohne ein Indexloch erfolgen. Dies ist Insbesondere dann vorteilhaft möglich, wenn die Markierplatte aus einem transparenten Kunststoffmaterial hergestellt ist.

Das erfindungsgemäße Verfahren des Anspruchs 17 zur Herstellung eines Markiererstreifens nach einem oder mehreren der Ansprüche 1 bis 16 weist folgende Schritte auf:
a) Extrudieren eines Streifens im Mehr- , insbesondere Zwei-Komponenten-Co-Extrusionsverfahren aus zwei Kunststoffmaterialien verschiedener Härte, derart, dass die Rastkontur jedes Markiererelementes aus dem härteren Kunststoffmaterial besteht und dass die Markierplatte zumindest im Bereich des Beschriftungsfeldes aus dem weicheren Kunststoffmaterial besteht und dass der Verbindungsbereich zwischen den Markierelementen jeweils ebenfalls ganz oder teilweise aus dem weicheren Kunststoffmaterial besteht;
b) jeweils Trennen der Raststege benachbarter Markiererelemente des Markiererstreifens voneinander.

Die Herstellung ist besonders einfach, wenn der Bereich, welcher aus dem ersten Material besteht, im Querschnitt wannenförmig (U-förmig) und der Bereich, der aus dem zweiten härteren Material besteht, in etwa V-förmig ist.

Nachfolgend wird die Erfindung unter Bezug auf die Zeichnung anhand von Ausführungsbeispielen näher beschrieben. Es zeigt:
- Fig. 1: in a) eine perspektivische Ansicht eines Markiererstreifens und in b) eine Schnittansicht des Marierstreifens aus Fig. 1a;
- Fig. 2: eine perspektivische Ansicht eines einzelnen Markiererelementes eines Markiererstreifens mit schraffiert dargestellten Verbindungsstegen;
- Fig. 3: in a) und b) jeweils eine perspektivische Ansicht eines einzelnen Markiererelementes eines Markiererstreifens mit Schraffierungen und Pfeilen, welche Stanzvorgänge bei der Herstellung des Markiererstreifens veranschaulichen sollen; und
- Fig. 4: eine schematische Darstellung eines sich im Bereich eines Druckkopfes eines Druckers befindlichen Markiererstreifens;
- Fig. 5: eine perspektivische Ansicht einer Ausführungsvariante eines Markiererstreifens;
- Fig. 6: eine Schnittansicht des Markiererstreifens aus Fig. 5;
- Fig. 7a: eine perspektivische Ansicht von aneinandergereihten Reihenklemmen mit einem eingesetzten Markiererstreifens nach Fig. 5
- Fig. 7b: eine Vorderansicht der aneinandergereihten Reihenklemmen nach Fig. 7a mit einem eingesetzten Markiererstreifens nach Fig. 5
- Fig. 8: eine perspektivische Ansicht einer weiteren Ausführungsvariante eines Markiererstreifens

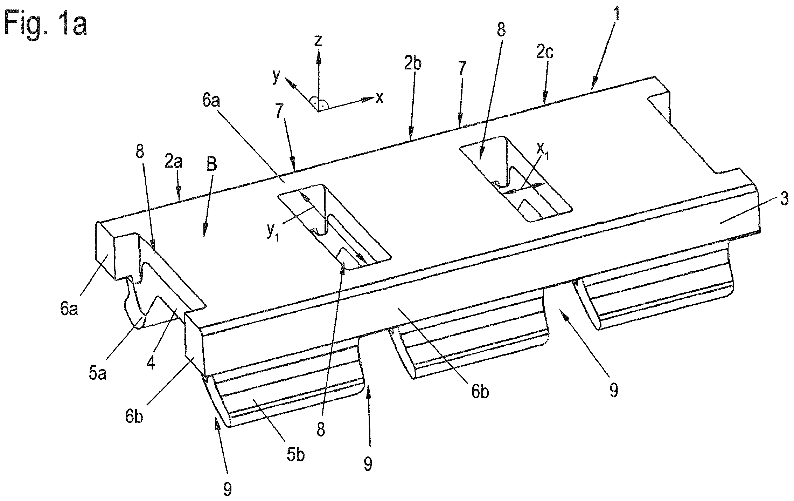

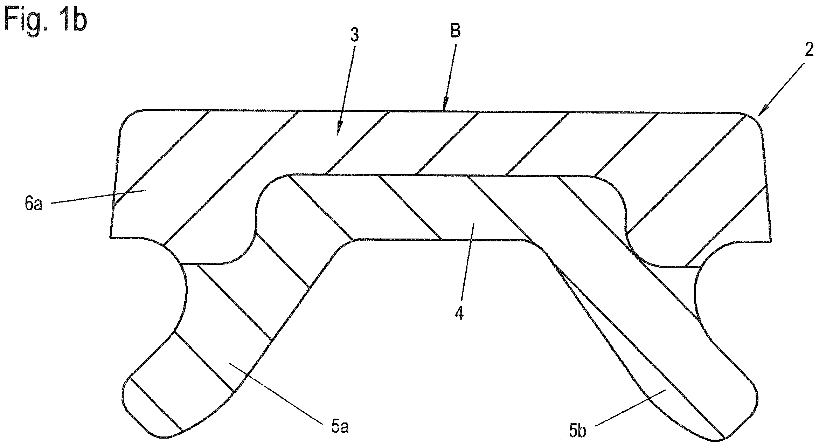

Fig. 1 zeigt einen Markiererstreifen 1, der eine Mehrzahl oder Vielzahl von Markiererelementen 2a, b, c aufweist, die miteinander verbunden sind.

Der Markiererstreifen 1 mit den Markiererelementen 2 ist zum Markieren von elektrischen Geräten, insbesondere anreihbaren elektrischen Geräten, vorzugsweise aneinandergereihten Reihenklemmen ausgebildet. Dazu weist jedes der Markiererelemente 2 eine Markierplatte 3 mit wenigstens einem Beschriftungsfeld auf, dass mit einer Information wie einer Beschriftung versehbar ist. Vorzugsweise ist das Beschriftungsfeld 3 dazu ausgelegt, mit einem Drucker bedruckt zu werden.

Jedes der Markiererelementen 2 weist ferner an der vom Beschriftungsfeld abgewandten Seite eine einstückig mit der jeweiligen Markierplatte 3 verbundene Rastkontur 4 zur rastenden Anbringung an einer (hier nicht dargestellten) korrespondierenden Rastkontur eines korrespondierenden elektrischen Gerätes auf.

Hier ist die Rastkontur 4 jedes Markiererelementes jeweils aus zwei Raststegen 5a, 5b gebildet, die dazu ausgebildet sind, in eine korrespondierend geformte Rastausnehmung der elektrischen Geräte einzugreifen, so dass sie nach dem Aufrasten am elektrischen Gerät rastend gehalten sind.

Die Haupterstreckungsrichtung des Markiererstreifens 1 in Anreihrichtung ist mit X bezeichnet. Zum Aufrasten auf jeweils eines der Geräte ist das jeweilige Markierelement 2 im Wesentlichen senkrecht dazu in eine Aufrastrichtung -Z zu bewegen. Das Beschriftungsfeld B der Markiererplatte erstreckt sich hier im Wesentlichen in einer zur Aufrastrichtung -Z senkrechten Ebene X-Y.

Die einzelnen Markiererelemente 2 sind einem elastisch in X-Richtung begrenzt dehn- und/oder stauchbarem Verbindungsbereich 7 durch wenigstens einen oder mehrere, hier vorteilhaft zwei Verbindungssteg(e) 6a, 6b miteinander verbunden. Hier verlaufen die Verbindungsstege 6a, 6b in bevorzugter Ausgestaltung beabstandet parallel zueinander. Derart ist zwischen den vorzugsweise zwei Verbindungsstegen 6a, 6b jeweils wenigstens ein Loch, insbesondere ein umfangsgeschlossenes) Langloch 8 ausgebildet, das die Markiererstreifen 1 in Richtung -Z (also in Aufrastrichtung) vorzugsweise senkrecht zu ihrer Anreihrichtung durchsetzt.

Vorzugsweise weist das Loch, insbesondere das Langloch, 8 in Anreihrichtung (in etwa oder genau) eine Erstreckung X1 auf, welche dem Abstand zwischen zwei Markiereröffnungen zwischen zwei aneinander gereihten Geräten entspricht. Quer zur Anreihrichtung hat das Langloch hier eine Erstreckung Y1. Es wäre auch denkbar, beispielsweise drei Verbindungsstege vorzusehen und zwei (vorzugsweise umfangsgeschlossene) Löcher, wobei dann der dritte Verbindungsteg beispielsweise mittig zwischen den beiden äußeren Verbindungsstegen angeordnet wäre. Es wäre alternativ aber auch denkbar, nur einen einzigen Verbindungssteg (z.B. mittig) vorzusehen, wobei dann die Löcher an den beiden Seiten des Verbindungssteges jeweils zu einem Rand hin offen (d.h. wie Randausnehmungen bzw. Schlitze) ausgebildet wären (nicht umfangsgeschlossen).

Da auch der Abstand der Löcher zueinander dem Rastermaß bzw. der Breite der aneinandergereihten Geräte entspricht, kann das Loch 8 oder können die Löcher auch in vorteilhafter Weise als Sensierungsmarkierung zur Sensierung durch einen Sensor des Druckers zum Starten oder Stoppen eines Druckvorgangs zum Bedrucken jeweils eines Beschriftungsfeldes B genutzt werden.

In dem Bereich unterhalb der Verbindungsstege 6a, 6b ist jeweils zwischen zwei zueinander benachbarten Markiererelementen ein Spalt 9 (bzw. eine Art sich Y- Richtung erstreckender Nut) ausgebildet, der sich quer zur Anreihrichtung X (also in Y-/Z-Richtung) vollständig durch die Markiererelemente hindurch erstreckt. Derart trennt der Spalt 9 jeweils die Raststege 5a, b, benachbarter Markiererelemente 2a, 2b usw. voneinander, Gegen die Anreihrichtung X erstreckt sich der Spalt/Einschnitt 9 aber nur ein Stück weit in den Markiererstreifen und zwar vorzugsweise bis zum Endbereich Ende der Raststege 5a, b , d.h. bis in den Bereich hinein, in welchem die Raststege 5a, b in die Markiererplatte 3 übergehen. Die Breite des Spaltes 9 entspricht dabei vorzugsweise der Breite X1 der Langlöcher 8. Die Spalte 9 erleichtern auch das Aufrollen des Markiererstreifens auf eine Rolle.

Der Markiererstreifen 1 ist aus einem im Extrusionsverfahren, vorzugsweise im Co-Co-Extrusionsverfahren, hergestellten Kunststoffprofil gefertigt, wobei sich ein bevorzugter Querschnitt aus Fig. 1a erschließt. Die Extrusionsrichtung entspricht der Haupterstreckungsrichtung X. Im jeweils benachbarte einzelne Markierelemente 2a, b, an diesem Markiererstreifen 1 zu definieren, werden bei der Herstellung des Markiererstreifens im Anschluss an den Extrusionsvorgang jeweils wenigstens zwei Stanzungen und/oder Schneidvorgänge durchgeführt, um den Spalt 9 und das Loch 8 auszubilden. Deren Richtung ist vorzugsweise senkrecht zu der Extrusionsrichtung X.

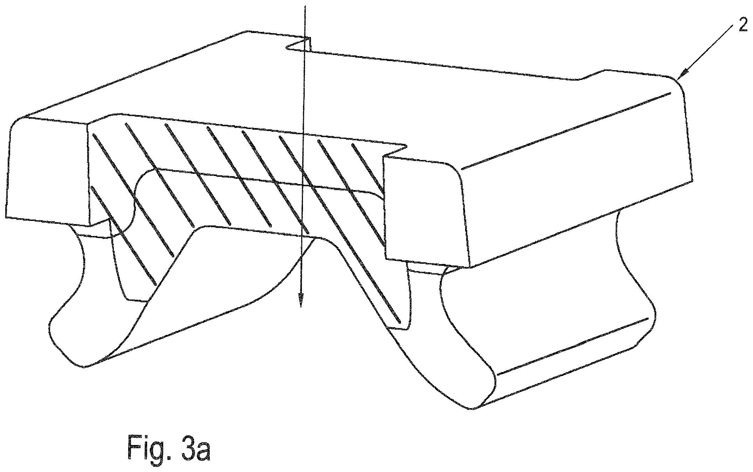

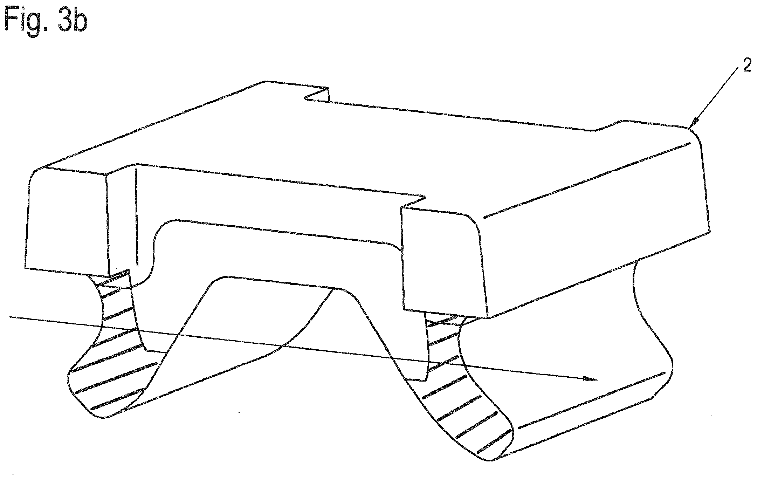

Die erste dieser Stanzungen ist in Fig. 3a dargestellt. Bei dieser Stanzung wird ein Stanzwerkzeug in (oder gegen) die Aufrastrichtung Z bewegt, um in dem Verbindungsbereich zwischen zwei Markierelementen 2a, b, v, ... jeweils das wenigstens eine Loch 8 auszubilden. Der Spalt 9 wird hingegen vorzugsweise durch eine (in Fig. 3b angedeutete) weitere Stanzung in (oder gegen) die Y-Richtung ausgebildet.

Besonders bevorzugt ist es, wenn bei dem Herstellen des Markiererstreifens ein Mehrkomponenten-, insbesondere ein Zwei-Komponenten-Co-Extrusionsverfahren eingesetzt wird. Dies bedeutet, dass der damit hergestellte Markiererstreifen aus zwei verschiedenen Materialien besteht.

Vorzugsweise wird dieses Extrusionsverfahren so durchgeführt, dass die Bereiche, welche nach der Fertigstellung bzw. nach den Stanzungen die Markierplatte 3 mit der Beschriftungsfläche und die Verbindungsstege 6a, b ausbilden, aus einem weicheren ersten Material bestehen als die Raststege 5a, b, welche aus einem härteren zweiten Material bestehen.

Vorzugsweise ist der Bereich, welcher aus dem ersten Material besteht, im Querschnitt wannenförmig (U-förmig) und der Bereich, der aus dem zweiten härteren Material besteht, in etwa V-förmig. Als das erste Material eignen sich zum Beispiel (vorzugsweise) weiches) Polyurethan, thermoplastische Elastomere oder Polyamid. Als das zweite Material eignen sich im Vergleich dazu härtere, höherviskose thermoplastische Elastomere und/oder PA, PC, PCABS, härteres PUR).

Besonders vorteilhaft ist, wenn zudem die Verbindungsstege 6a, 6b ganz oder teilweise aus dem weicheren und vorzugsweise elastischeren Material bestehen. Denn derart lassen sich durch Dehnung und/oder Stauchung auf einfache Weise Toleranzen in den Abständen benachbarter Rastausnehmungen ausgleichen. Dagegen ist es vorteilhaft, wenn die Raststege 5a, b aus dem härteren und vorzugsweise weniger elastischen Material bestehen, so das sie gut dazu geeignet sind, ihre Rastfunktion auszuüben.

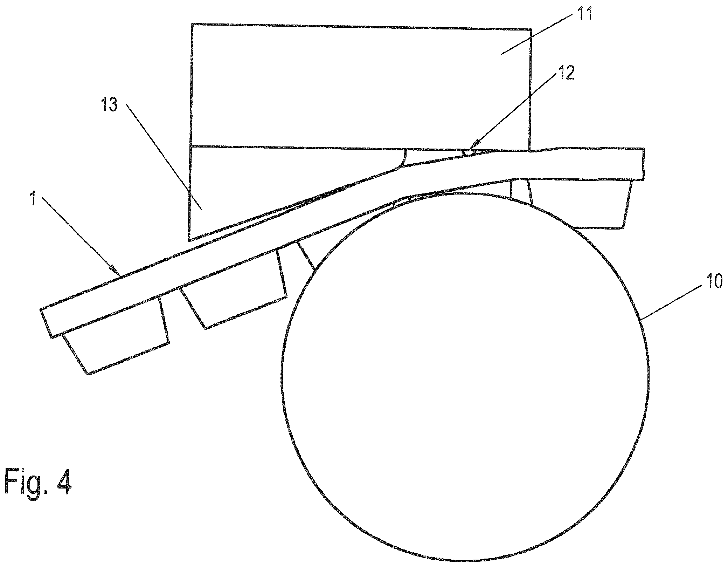

Es ist weiter vorteilhaft, wenn die Markierplatte der Markierelemente ganz oder teilweise aus dem weicheren Material besteht. Denn dieses Material lässt sich leichter und präziser durch den Bereich eines Druckkopfes leiten (siehe Fig. 4) als eine steife Platte (siehe Fig. 4), die ansonsten beim Bedrucken womöglich schräg ausgerichtet ist, was die Qualität des Druckvorganges beeinträchtigen kann. Dies liegt insbesondere daran, dass im Bereich einer Andruckrolle 10, welche, den Markiererstreifen 1 an einen Druckkopf 11 mit Heizleiste 12 drücken soll, durch eine Störkontur 13 eine unsaubere Anlage an der Heizleiste entstehen kann. Ist dagegen die Druckplatte aus einem genügend flexiblen Material befestigt, tritt dieser Fall nicht auf. Das Material wird vielmehr durch seine Elastizität jeweils sicher an die Heizleiste gedrückt (Fig. 4). Der Markiererstreifen deformiert sich etwas vor unter hinter der Heizleiste und liegt sicher an dieser an.

Zum Markieren einer Reihenklemmenanordnung auf einer Tragschiene ist es dann lediglich notwendig, den Markiererstreifen 1 - siehe Fig. 1 a - über den Bereich der aneinander gereihten Rastkonturen der Reihenklemmen zu legen und dann von oben so auf die einzelnen Markiererelemente 2 zu drücken, dass ein sicheres Verrasten der Markiererelemente 2 an den Reihenklemmen erfolgt. Sodann oder zuvor wird der Markiererstreifen von einer Art "Endlosstreifen", beispielsweise auf einer Rolle, so abgelängt, dass die Anzahl der Markiererelemente 2a, b, c, ... der Anzahl der zu markierenden aneinander gereihten Geräte entspricht. Der Markiererstreifen der Fig. 1a ist damit beispielsweise zur Markierung von drei aneinander gereihten Geräten geeignet. Es sind aber auch sehr viel mehr aneinander gereihte Geräte in einem Arbeitsgang markierbar.

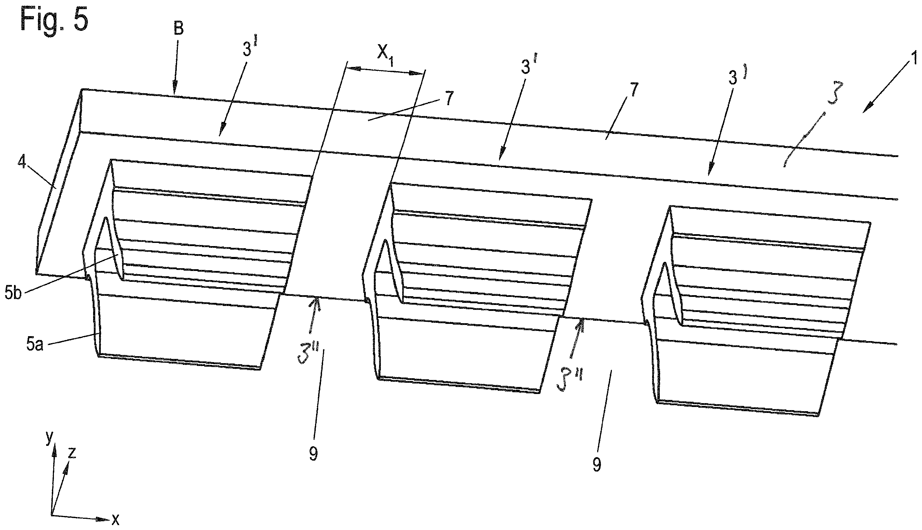

In Fig. 5 ist eine alternative Ausführungsform des Markierungsstreifens 1 dargestellt. Der Markierungstreifen 1 nach dieser alternativen Ausführungsform weist zwar noch für jedes der Markiererelemente 2 eine Markierplatte 3 auf. Diese Markierplatten 3 sind auch wiederum über Verbindungsbereiche 7 einstückig miteinander verbunden. Die Verbindungsbereiche sind aber besonders vorteilhaft so ausgestaltet, dass insgesamt über mehrere der Markiererelemente 2 hinweg eine übergeordnete durchgehende Beschriftungsfläche ausgebildet wird, die aus den einstückig miteinander verbundenen Markierplatten 3 besteht. In den Verbindungsbereichen 7 der Markierplatten 3 sind keine Löcher 8 oder Randausnehmungen ausgebildet. Vorzugsweise weisen die Markierplatten 3 und die Verbindungsbereiche 7 sogar einen gleichen Querschnitt auf. All dies vereinfacht die Herstellung durch den Verzicht eines Arbeitsschrittes zum Einbringen der Löcher und optimiert die Beschriftbarkeit.

Die Rastkonturen 4 des Ausführungsbeispiels der Fig. 5 weisen in regelmäßigen Abständen jeweils den Spalt 9 (bzw. eine Art sich in Y- Richtung erstreckender Nut) auf, der sich quer zur Anreihrichtung X (also in Y-/Z-Richtung) vollständig durch die Rastkontur 4 hindurch erstreckt. Derart trennt der Spalt 9 jeweils die Raststege 5a, 5b. Gegen die Anreihrichtung X erstreckt sich der Spalt/Einschnitt 9. Die Breite des Spaltes 9 entspricht dabei vorzugsweise der Breite X1. Die Spalte 9 zwischen den Rastkontur 4 erleichtern auch das Aufrollen des Markiererstreifens auf eine Rolle.

Die Abstände zwischen den Spalten 9 zwischen den Raststegen 5a, b der nebeneinander liegenden Markiererelemente 2 sind auch wieder so bemessen, dass die Breite der verbleibenden Rastkontur 4 addiert mit der Breite X1 des Spaltes 9 ein Rastermaß der Gerätebreite -wie z.B. die Breite einer Reihenklemme- entspricht. Ein Toleranzausgleich zur Überbrückung von Toleranzen, wie sie z.B. durch das Aneinanderreihen von Geräten, wie z.B. Reihenklemmen entstehen können, wird durch die Verbindungsbereiche 7 der Markierplatte gewährleistet, die wie die Markierplatte aus einem elastischen Kunststoff hergestellt sind und dadurch im markierten Zustand Toleranzen ausgleichen können.

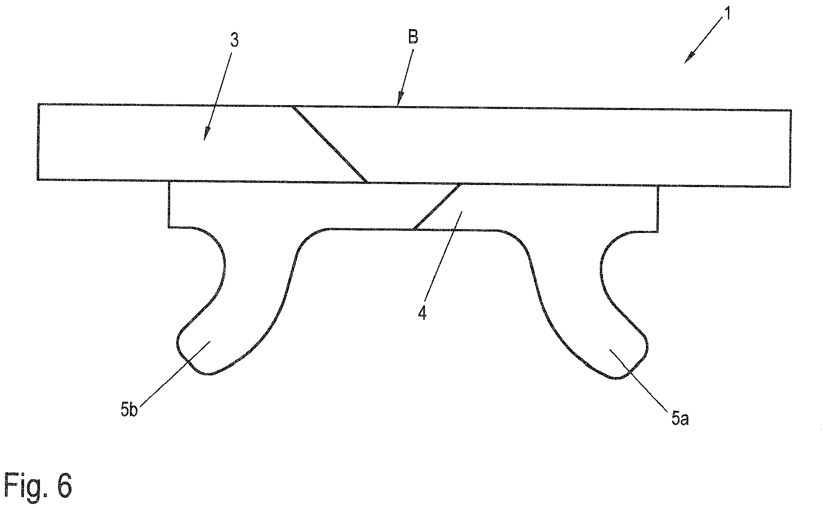

Der Markiererstreifen 1 in der alternativen Ausführungsform ist wiederum vorzugsweise aus einem im Extrusionsverfahren, vorzugsweise im Co-Extrusionsverfahren, hergestellten Kunststoffprofil gefertigt, dessen bevorzugter Querschnitt sich aus Fig. 6 erschließt. Die Extrusionsrichtung entspricht der Haupterstreckungsrichtung X (siehe Koordinatensystem in Fig. 5).

Um die Spalte 9 herzustellen, werden wiederum Stanzungen und/oder Schneidvorgänge durchgeführt. Deren Richtung ist vorzugsweise senkrecht zu der Extrusionsrichtung X bzw. in (oder gegen) die Y-Richtung ausgebildet.

Besonders bevorzugt ist es, wenn bei dem Herstellen des Markiererstreifens 1 der alternativen Ausführungsform auch wiederum ein Mehrkomponenten-, insbesondere ein Zwei-Komponenten-Co-Extrusionsverfahren eingesetzt wird. Dies bedeutet, dass auch der Markiererstreifen 1 der alternativen Ausführungsform der Fig. 5 bis 8 aus wenigstens zwei verschiedenen Materialien besteht.

Vorzugsweise wird dieses Extrusionsverfahren wiederum so durchgeführt, dass die Bereiche, welche die Markierplatte 3 mit der Beschriftungsfläche ausbilden, aus einem weicheren, ersten Material bestehen als die Rastkontur 4 bzw. die Raststege 5a, b, welche aus einem härteren zweiten Material bestehen.

Es ist vorteilhaft, wenn die Raststege 5a, b aus dem härteren und vorzugsweise weniger elastischen Material bestehen, so dass sie gut dazu geeignet sind, ihre Rastfunktion auszuüben. Die Markiererplatte 3 weist direkt oberhalb der Rastkontur 4 liegende Bereiche auf 3' und oberhalb und in Draufsicht zwischen den Rastkonturen 4 liegende Bereiche 3". Da die Markiererplatte aus einem weicheren Kunststoffmaterial besteht als die Rastkonturen 4, übernehmen diese zwischen den Rastkonturen liegenden Bereiche 3" die Funktion des Verbindungsbereiches 7 zwischen den Rastkonturen 4.

Es ist weiter vorteilhaft, wenn die Markierplatte 3 ganz oder teilweise aus dem weicheren Material besteht. Denn dieses Material lässt - siehe die Beschreibung zu Fig. 4 - sich leichter und präziser durch den Bereich eines Druckkopfes leiten (siehe Fig. 4) als eine steife Platte (siehe Fig. 4).

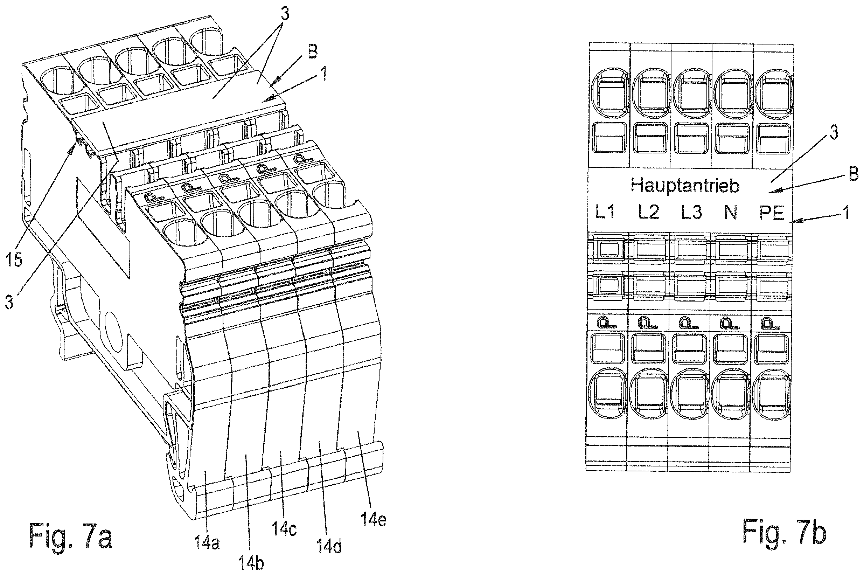

Zum Markieren einer Gehäuseanordnung, insbesondere einer Reihenklemmenanordnung 14 aus Reihenklemmen 14a, b, c, ... (siehe Fig. 7a, bzw. 7b) auf einer Tragschiene ist es wiederum lediglich notwendig, den Markiererstreifen 1 - siehe Fig. 5 - über den Bereich der aneinander gereihten Rastkonturen 15 der Reihenklemmen zu legen und dann von oben so auf die Markierplatte 3 zu drücken, dass ein sicheres Verrasten des Markiererstreifens 1 an den Reihenklemmen erfolgt. Sodann oder zuvor wird der Markiererstreifen 1 von einer Art "Endlosstreifen", beispielsweise auf einer Rolle, so abgelängt, dass die Länge des Abschnitts die Länge der zu markierenden aneinander gereihten Geräte entspricht. Der Markiererstreifen 1 ist damit (siehe Fig. 7a, bzw. 7b) hier beispielsweise zur Markierung von fünf aneinander gereihten Geräten geeignet. Es sind aber auch sehr viel mehr aneinander gereihte Geräte in einem Arbeitsgang markierbar.

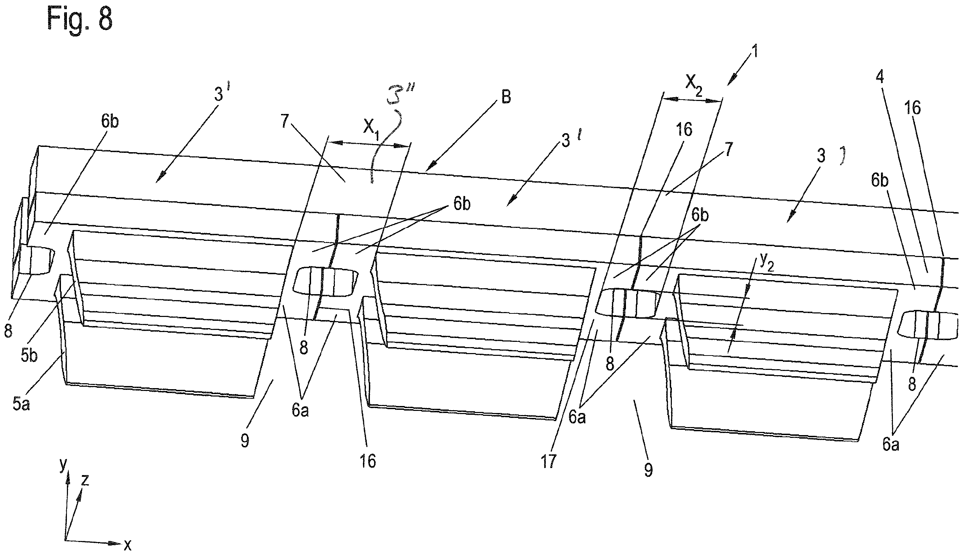

In Fig. 8 ist eine weitere alternative Ausführungsform des Markiererstreifens 1 dargestellt. Um Wiederholungen zu vermeiden, werden im Folgenden insbesondere Abweichungen oder Ergänzungen zu der Ausführungsform des Markiererstreifens 1 nach Fig. 5 beschrieben.4 In der alternativen Ausführung des Markiererstreifens 1 nach Fig. 8 wird das härtere Kunststoffmaterial in den Verbindungsbereichen 7 durch die Spalte 9 nicht vollständig durchtrennt, so dass sich zwischen den Rastkonturen 4 aus dem härterem Kunststoffmaterial im Verbindungsbereich 7 auch ein nicht durch die Spalte 9 senkrecht zur Anreihrichtung unterbrochener Steg 17 aus dem härterem Kunststoffmaterial ergibt, der unter dem weicheren Kunststoffmaterial liegt. Nur die eigentlichen Raststege 5a, b sind vorzugsweise von den Spalten 9 durchtrennt. Derart wird das weichere Kunststoffmaterial gut großflächig nach unten hin abgestützt, was das Bedrucken erleichtert. Der Steg 17 aus härterem Material ist unterhalb der Markiererplatte in deren Bereich 3" im Verbindungsbereich 7 zwischen zwei Rastkonturen 4 vorzugsweise jeweils im Bereich des Lochs, insbesondere Langlochs 8, durch einen Schlitz 16, der in y-Richtung nach dem Koordinatensystem in Fig. 8 bzw. senkrecht zur Anreihrichtung verläuft, (sehr schmal) doch noch ganz oder fast bis zum weicheren Material durchtrennt. Dieser Schlitz 16 ist (jeweils vorzugsweise deutlich) schmaler als der Spalt 9. Bevorzugt hat er lediglich die Breite eines den Schlitz 16 einbringenden dünnen Messers. Durch diese Schlitze 16 bleibt der Markiererstreifen im Drucker und beim Aufrasten hinreichend flexibel und beweglich und kann doch im Verbindungsbereich 7 Toleranzen ausgleichend etwas gedehnt und/oder bewegt, ggf. sogar ganz etwas gestaucht werden. Zudem ist so die Herstellung einfach.

Der Markiererstreifen 1 der Fig. 8 weist vorzugsweise wiederum die Löcher, insbesondere Langlöcher 8, auf, welche die Markiererplatte 3 aus weicherem Kunststoffmaterial und den Steg 17 aus härterem kunststoffmaterial in Richtung -Z (also in Aufrastrichtung) vorzugsweise senkrecht zu der Anreihrichtung des Markiererstreifens 1 vorzugsweise durchsetzen, so dass sich die Verbindungsstege 6 beidseits der Löcher 8 bilden. Diese Verbindungsstege 6 bestehen aus weicherem Kunststoffmaterial. Unter ihnen liegt aber hier auch das härtere Kunststoffmaterial, ganz oder fast ganz durchtrennt nur durch den Schlitz 16. Es ist aber auch denkbar, dass der Spalt 9 lediglich die Raststege 5a, 5b trennt. Die dann durchgängig verbleibende "harte Verbindung" zwischen zwei Schildern wird dabei vorzugsweise lediglich geschlitzt, d.h. eingeschnitten, ohne Material abzutragen. So wird ebenfallseine Elastizität des Stranges in X erreicht obwohl der Strang in sich stabiler ist, was das Handling im Drucker u.U. begünstigt.

Das Loch, insbesondere das Langloch, 8, weist nach Fig. 8 in Anreihrichtung (in etwa oder genau) eine Erstreckung X2 auf, welche kleiner ist als der Abstand X1 zwischen zwei Markiereröffnungen zwischen zwei aneinander gereihten Geräten. Da vorzugsweise wieder der Abstand der Löcher zueinander dem Rastermaß bzw. der Breite der aneinandergereihten Geräte entspricht, kann das Loch 8 oder können die Löcher auch in vorteilhafter Weise als Sensierungsmarkierung zur Sensierung durch einen Sensor des Druckers zum Starten oder Stoppen eines Druckvorgangs zum Bedrucken jeweils eines Beschriftungsfeldes B genutzt werden.

Senkrecht zur Anreihrichtung bzw. in y-Richtung nach dem Koordinatensystem in Fig. 8 hat das Loch, insbesondere Langloch 8 hier eine Erstreckung Y2, wobei Y2 kleiner oder gleich Y1 ist.

In Fig. 7a bzw. Fig. 7b ist auch gut erkennbar dargestellt, dass sich der Markierungsstreifen der alternativen Ausführungsformen nach Fig. 5 und 6 dadurch vorteilhaft auszeichnet, dass keinerlei Öffnungen die Markierplatte unterbrechen, so dass geräteübergreifende Beschriftungen einfach und damit vorteilhaft möglich sind. In Fig. 7a, bzw. 7b ist beispielhaft die Beschriftung "Hauptantrieb" geräteübergreifend ausgeführt. Die Beschriftung "Hauptantrieb" -hier beispielhaft für einen Antriebsmotor, der hier mit 3-Phasen-Wechselspannung betrieben wird (L1 bis L3), sowie einen Nulleiter- (N) und einen Schutzleiteranschluss (PE) aufweist- übergreift demnach fünf Geräte, hier die Reihenklemmen 14.

Um für die Beschriftung des Markiererstreifens 1 der alternativen Ausführungsform nach Fig. 5 eine Indexierungsmöglichkeit für einen Drucker zu schaffen, bieten sich - je nach verwendetem Sensortyp zur Indexierung- verschiedene Möglichkeiten an. Durch die Indexierung erkennt der Drucker ein vorgegebenes Rastermaß für eine entsprechende Gerätebeschriftung.

Eine erste Möglichkeit zur Indexierung stellt ein in die der Markierplatte 3 eingebrachtes Sensorloch dar. Als Sensortyp zur Indexierung für einen Drucker wird vorzugsweise eine Gabellichtschranke verwendet. Für eine zweite Möglichkeit zur Indexierung wird der Rastfuß 4 dunkel, z.B. schwarz eingefärbt, während die Markierplatte 3 hell, z.B. weiß eingefärbt wird. Damit ist von unten (d.h. in Richtung positiver z-Werte nach dem Koordinatensystem in Fig. 5) betrachtet ein fortlaufender hell-dunkel-Wechsel vorhanden, der idealerweise möglichst kontrastreich gestaltet ist, wie dies durch einen schwarz-weiß-Wechsel erreicht werden kann. Ein solcher hell-dunkel-Wechsel kann von einem Reflexlichttaster gelesen werden. Bei der dritten Möglichkeit der Indexierung wird die Weichkomponente - hier die Markierplatte 3 - ausreichend lichtdurchlässig ausgelegt. Dies kann durch eine entsprechende Bemessung der Dicke (Erstreckung in z-Richtung, siehe Koordinatensystem in Fig. 5) der Markierplatte erfolgen und / oder durch eine entsprechende Materialauswahl erfolgen, bei der transparente oder zumindest transluzente Materialien bevorzugt sind. Somit kann als Sensortyp in dem Fall auch eine Lichtschranke verwendet werden, die durch die Weichkomponente "hindurchsehen" kann.

Insbesondere durch die zweite und dritte Möglichkeit zur Indexierung ergibt sich vorteilhaft ein optisch ansprechenderes Design des Markiererstreifens 1 bzw. der Markierplatte 3, da auf ein Indexloch verzichtet wird.

Darüber hinaus ergibt sich bei diesen beiden Möglichkeiten vorteilhaft im Vergleich zu solchen Lösungen mit Indexloch eine größere beschriftbare Fläche je Gerät bzw. je Rastermaß.

**Bezugszeichen**

| | |
|---|---|
| Markiererstreifen | 1 |
| Markiererelemente | 2 |
| Markierplatte | 3 |
| Bereiche | 3', 3" |
| Rastkontur | 4 |
| Raststege | 5a, b |
| Verbindungsstege | 6a, 6b |
| Verbindungsbereich | 7 |
| Langloch | 8 |
| Spalt | 9 |
| Andruckrolle | 10 |
| Druckkopf | 11 |
| Heizleiste | 12 |
| Störkontur | 13 |
| Reihenklemmenanordnung | 14 |
| Reihenklemmen | 14a, b, c, d, |
| Rastkontur | 15 |
| Schlitz | 16 |
| Steg | 17 |
| Beschriftungsfeld | B |
| Anreihrichtung | X |
| Aufrastrichtung | Z |
| Richtung | Y |
| Erstreckung | X1, X2 |

## Patentansprüche

1. Markiererstreifen (1), der eine Mehrzahl von Markiererelementen (2a, b, c) aufweist, die jeweils über einen Verbindungsbereich (7) miteinander verbunden sind, wobei der Markiererstreifen (1) mit den Markiererelementen (2) zum Markieren von elektrischen Geräten ausgebildet ist, wozu jedes der Markiererelemente (2) eine Markierplatte (3) mit wenigstens einem Beschriftungsfeld aufweist, das mit einer Information wie einer Beschriftung versehbar ist und wobei jedes der Markiererelemente (2) an der vom Beschriftungsfeld abgewandten Seite eine insbesondere einstückig mit der jeweiligen Markierplatte (3) verbundene Rastkontur (4) aufweist,
wobei der Markiererstreifen aus wenigstens zwei verschiedenen Kunststoffmaterialien verschiedener Härte besteht, **dadurch gekennzeichnet, dass**
a. die Rastkontur (4) jedes Markiererelementes (1) aus dem härteren Kunststoffmaterial besteht, und
b. die Markierplatte (3) zumindest im Bereich des Beschriftungsfeldes aus dem weicheren Kunststoffmaterial besteht und/oder dass der Verbindungsbereich (7) zwischen den Markierelementen (2) jeweils ganz oder teilweise aus dem weicheren Kunststoffbereich besteht.

2. Markiererstreifen (1) nach Anspruch 1, **dadurch gekennzeichnet, dass** der Markiererstreifen (1) im Extrusionsverfahren hergestellt ist.

3. Markiererstreifen (1) nach Anspruch 2, **dadurch gekennzeichnet, dass** der Markiererstreifen (1) aus einem im Zwei-Komponenten-Co-Extrusionsverfahren hergestellten Kunststoffprofil gefertigt ist.

4. Markiererstreifen (1) nach Anspruch 1, 2 oder 3, **dadurch gekennzeichnet, dass** der Markiererstreifen (1) mit den Markiererelementen (2) zum Markieren von anreihbaren elektrischen Geräten wie aneinandergereihten Reihenklemmen ausgestaltet ist.

5. Markiererstreifen (1) nach einem der vorstehenden Ansprüche, **dadurch gekennzeichnet, dass** die Verbindungsbereiche (7) zwischen den Markierelementen (2) jeweils aus wenigstens einem oder mehreren Verbindungssteg(en) (6a, 6b) bestehen und/oder dass die Verbindungsbereiche (7) den gleichen Querschnitt wie die Markiererplatten (3) aufweisen, so dass über den Markiererstreifen hinweg eine durchgehende Beschriftungsfläche gebildet wird.

6. Markiererstreifen (1) nach dem vorstehenden Anspruch, **dadurch gekennzeichnet, dass** in den Verbindungsbereichen (7) zwischen benachbarten Markierelementen (2a, b, c) wenigstens ein Loch, insbesondere ein Langloch (8) ausgebildet ist, das die Markiererelemente (2) in Aufrastrichtung senkrecht zu ihrer Anreihrichtung durchsetzt, wobei das Loch (8) zwischen den beiden Verbindungsstegen (6a, b) ausgebildet ist und/oder das Loch (8) umfangsgeschlossen ausgebildet ist oder als nicht umfangsgeschlossene Randausnehmung ausgebildet ist.

7. Markiererstreifen (1) nach dem vorstehenden Anspruch, **dadurch gekennzeichnet, dass** das Loch (8) als Sensierungsmittel zum Erfassen durch einen Sensor eines Druckers nutzbar ist.

8. Markiererstreifen (1) nach Anspruch 6, **dadurch gekennzeichnet, dass** in dem Bereich unterhalb der Verbindungsstege (6a, 6b) jeweils zwischen zwei zueinander benachbarten Markiererelementen ein Spalt (9) ausgebildet ist, der benachbarte Rastkonturen voneinander trennt und dass die Verbindungsbereiche (7) oberhalb der Spalte (9) liegen.

9. Markiererstreifen (1) nach einem der vorstehenden Ansprüche, **dadurch gekennzeichnet, dass** der Bereich, welcher aus dem ersten Material besteht, im Querschnitt wannenförmig (U-förmig) und der Bereich, der aus dem zweiten härteren Material besteht, in etwa V-förmig ist.

10. Markiererstreifen (1) nach einem der vorstehenden Ansprüche, **dadurch gekennzeichnet, dass** die Markierplatte (3) über mehrere sämtliche, der Markiererelemente (2a, 2b, 2c) des Markiererstreifens (1) hinweg durchgängig einstückig ausgebildet sind, so dass sie eine sich über mehrere Markiererelemente (2) hinweg erstreckende Beschriftungsfläche ausbilden.

11. Markiererstreifen (1) nach einem der vorstehenden Ansprüche 1 bis 3, **dadurch gekennzeichnet, dass** die Verbindungsbereiche (7) kein Loch bzw. keine Ausnehmung und kein Fenster aufweisen.

12. Markiererstreifen (1) nach einem der vorstehenden Ansprüche, **dadurch gekennzeichnet, dass** die Rastkontur (4) jedes Markiererelementes (2a, 2b, 2c) aus einem dunkleren Kunststoffmaterial als die Markierplatte (3) besteht und dass die Markierplatte (3) aus einem helleren Kunststoffmaterial als die Rastkontur (4) besteht oder dass die Markierplatte (3) aus einem zumindest abschnittsweise transluzenten Kunststoffmaterial besteht oder dass die Markierplatte (3) aus einem transparenten Kunststoffmaterial besteht.

13. Markiererstreifen (1) nach einem der vorgenannten Ansprüche, **dadurch gekennzeichnet, dass** der Spalt (9) die Rastkonturen (4) im Bereich der Raststege (5a, 5b) voneinander trennt.

14. Markiererstreifen (1) nach einem der vorgenannten Ansprüche, **dadurch gekennzeichnet, dass** in den Verbindungsbereichen (7) Stege (17) aus dem härteren Kunststoffmaterial vorgesehen sind, in welche jeweils ein Schlitz (16) eingebracht ist.

15. Markiererstreifen (1) nach Ansprüche 8 und 14, **dadurch gekennzeichnet, dass** das härtere Kunststoffmaterial durch die Spalte (9) nicht vollständig unterbrochen wird, so dass sich zwischen der über mehrere Markierelemente durchgängigen Markierplatte (3) und den Rastkonturen ein durch die Spalte (9) senkrecht zur Anreihrichtung nicht unterbrochener Steg (17) aus dem härterem Kunststoffmaterial ergibt.

16. Markiererstreifen (1) nach einem der vorgenannten Ansprüche, **dadurch gekennzeichnet, dass** ein Steg (17) zwischen zwei Markiererelementen (2a, 2b, 2c) jeweils im Bereich der Verbindungsstege (6) durch einen Schlitz (16) senkrecht zur Anreihrichtung durchtrennt ist.

17. Verfahren zur Herstellung eines Markiererstreifens (1) nach Anspruch 1, wobei der Markiererstreifen (1), der eine Mehrzahl von Markiererelementen (2a, b, c) aufweist, die jeweils über einen Verbindungsbereich (7) miteinander verbunden sind, wobei der Markiererstreifen (1) mit den Markiererelementen (2) zum Markieren von elektrischen Geräten ausgebildet ist, wozu jedes der Markiererelemente (2) eine Markierplatte (3) mit wenigstens einem Beschriftungsfeld aufweist, das mit einer Information wie einer Beschriftung versehbar ist und wobei jedes der Markiererelemente (2) an der vom Beschriftungsfeld abgewandten Seite eine insbesondere einstückig mit der jeweiligen Markierplatte (3) verbundene Rastkontur (4) aufweist, wobei der Markiererstreifen aus wenigstens zwei verschiedenen Kunststoffmaterialien verschiedener Härte besteht, und wobei die Rastkontur (4) jedes Markiererelementes (1) aus dem härteren Kunststoffmaterial besteht, **gekennzeichnet durch** folgende Schritte:
a) Extrudieren eines Streifens im Mehr-Komponenten-Co-Extrusionsverfahren aus zwei Kunststoffmaterialien verschiedener Härte derart, dass die Rastkontur (4) jedes Markiererelementes aus dem härteren Kunststoffmaterial besteht und dass die Markierplatte (3) zumindest im Bereich des Beschriftungsfeldes jeweils aus dem weicheren Kunststoffmaterial besteht und dass der Verbindungsbereich (7) zwischen den Markierelementen ebenfalls jeweils ganz oder teilweise aus dem weicheren Kunststoffbereich besteht,
b) Trennen der Rastkonturen (4) benachbarter Markiererelemente (2a, b,
c) des Markiererstreifens (1) voneinander.

18. Verfahren nach Anspruch 17, **dadurch gekennzeichnet, dass** ein Einbringen jeweils eines Loches (8) in den Verbindungsbereich zwischen zwei benachbarten Markiererelementen (2a, b, c) des Markiererstreifens (1) erfolgt und/oder dass - zwischen Verfahrensschritt a) und Verfahrensschritt b) - ein Einbringen jeweils einer Materialschwächung in den Verbindungsbereich zwischen zwei benachbarten Markiererelementen (2a, b, c) des Markiererstreifens (1) erfolgt.

19. Verfahren nach Anspruch 17 oder 18, **dadurch gekennzeichnet, dass** ein Einbringen eines Schlitzes (16) in das härtere Kunststoffmaterial in dem Verbindungsbereich zwischen zwei benachbarten Markiererelementen (2a, b, c) des Markiererstreifens (1) erfolgt.

## Claims

1. A marking strip (1), which has a plurality of marking elements (2a, b, c), which are connected to each other by means of a connecting region (7) in each case, wherein the marking strip (1) having the marking elements (2) is designed to mark electrical devices, for which purpose each of the marking elements (2) has a marking plate (3) having at least one writing field, which can be provided with information such as writing, and wherein each of the marking elements (2) has, on the side facing away from the writing field, a locking contour (4), which is connected, in particular integrally, to the marking plate (3), wherein the marking strip is composed of at least two different plastic materials of different hardness, **characterized in that**
a. the locking contour (4) of each marking element (1) is composed of the harder plastic material, and
b. the marking plate (3) is composed of the softer plastic material at least in the region of the writing field, and/or that the connecting region (7) between the marking elements (2) completely or partially consists of the softer plastic region.

2. The marking strip (1) according to Claim 1, **characterized in that** the marking strip (1) is produced by the extrusion process.

3. The marking strip (1) according to Claim 2, **characterized in that** the marking strip (1) is fabricated from a plastic profile produced by the two-component coextrusion process.

4. The marking strip (1) according to Claim 1, 2 or 3, **characterized in that** the marking strip (1) with the marking elements (2) for marking electrical devices that can be arranged next to each other, such as terminal blocks arranged next to each other

5. The marking strip (1) according to any one of the preceding claims, **characterized in that** the connecting regions (7) between the marking elements (2) in each case consist of at least one or more connecting bar(s) (6a, 6b) and that the connecting regions (7) have the same cross section as the marking plates (3), so that a continuous writing surface is formed across the marking strip.

6. The marking strip (1) according to the preceding claim, **characterized in that** at least one hole, in particular an elongate hole (8), is formed in the connecting regions (7) between adjacent marking elements (2a, b, c), which passes through the marking elements (2) in snap-on direction perpendicular to the stacking direction thereof, wherein the hole (8) is formed between the two connecting bars (6a, 6b) and/or the hole (8) is formed peripherally closed or is formed as a marginal recess that is not peripherally closed.

7. The marking strip (1) according to the preceding claim, **characterized in that** the hole (8) can be used as a sensing means for the detection by a sensor of a printer.

8. The marking strip (1) according to Claim 6, **characterized in that**, in the region under the connecting bars (6a, 6b), in each case between two adjacent marking elements, a slot (9) is formed, which separates adjacent locking contours from one another, and that the connecting regions (7) are located above the slot (9).

9. The marking strip (1) according to any one of the preceding claims, **characterized in that** the region that consists of the first material is tub-shaped (U-shaped) in cross section and the region that consist of the second harder material is approximately V-shaped.

10. The marking strip (1) according to any one of the preceding claims, **characterized in that** the marking plate (3) is formed across several of all the marking elements (2a, 2b, 2c) of the marking strip (1) continuously forming one piece, so that they form a writing surface extending across several marking elements (2).

11. The marking strip (1) according Claims 1 to 3, **characterized in that** the connecting regions (7) comprise no hole, respectively no recess and no window.

12. The marking strip (1) according to any one of the preceding claims, **characterized in that** the locking contour (4) of each marking element (2a, 2b, 2c) consists of a darker plastic material than the marking plate (3) and that the marking plate (3) consists of a lighter colored plastic material than the locking contour (4) or that the marking plate (3) consists of a plastic material that is translucent at least in sections or that the marking plate (3) consists of a transparent plastic material.

13. The marking strip (1) according to any one of the preceding claims, **characterized in that** the slot (9) separates the locking contours (4) from one another in the region of the locking bars (5a, 5b).

14. The marking strip (1) according to any one of the preceding claims, **characterized in that**, in the connecting regions (7), bridges (17) made of the harder plastic material are provided, into which a slit (16) is introduced.

15. The marking strip (1) according to claims 8 and 14, **characterized in that** the harder plastic material is not completely interrupted by the slot (9), so that, between the marking plate (3) that is continuous over several marking elements and the locking contours, a bridge (17) made of the harder plastic material results, which is not interrupted by the slot (9) perpendicular to the stacking direction.

16. The marking strip (1) according to any one of the preceding claims, **characterized in that** a bridge (17) between two marking elements (2a, 2b, 2c) is cut through in each case in the region of the connecting bars (6) by a slit (16) perpendicular to the stacking direction.

17. A method for producing a marking strip (1) according to claim 1, wherein the marking strip (1) having a plurality of marking elements (2a, b, c), which are connected to each other by means of a connecting region (7) in each case, wherein the marking strip (1) having the marking elements (2) is designed to mark electrical devices, for which purpose each of the marking elements (2) has a marking plate (3) having at least one writing field, which can be provided with information such as writing, and wherein each of the marking elements (2) has, on the side facing away from the writing field, a locking contour (4), which is connected, in particular integrally, to the marking plate (3), wherein the marking strip is composed of at least two different plastic materials of different hardness and wherein the locking contour (4) of each marking element (1) is composed of the harder plastic material, **characterized by** the following steps:
a) extruding a strip by the multi-component coextrusion process from two plastic materials of different hardness, in such a manner that the locking contour (4) of each marking element consists of the harder plastic material and that the marking plate (3), at least in the region of the writing field, in each case consists of the softer plastic material, and that the connecting region (7) between the marking elements in each case also consists completely or partially of the softer plastic region,
b) separating the locking contours (4) of adjacent marking elements (2a, b, c) of the marking strip (1) from one another.

18. The method according to Claim 17, **characterized in that** an introduction in each case of a hole (8) into the connecting region between two adjacent marking elements (2a, b, c) of the marking strip (1) occurs and/or that - between method step (a) and method step (b) - an introduction of a material weakening occurs in each case in the connecting region between two adjacent marking elements (2a, b, c) of the marking strip (1).

19. The method according to Claim 17 or 18, **characterized in that** an introduction of a slit (16) into the harder plastic material occurs in the connecting region between two adjacent marking elements (2a, b, c) of the marking strip (1).

## Revendications

1. Bande de marquage (1) qui présente une pluralité d'éléments de marquage (2a, b, c) reliés les uns aux autres par une zone de liaison (7), la bande de marquage (1) avec les éléments de marquage (2) étant conçue pour marquer des appareils électriques, ce pour quoi chacun des éléments de marquage (2) présente une plaque de marquage (3) avec au moins un champ d'inscription qui peut être muni d'informations telles qu'une inscription, et chacun des éléments de marquage (2) présentant, sur le côté opposé au champ d'inscription, un contour d'encliquetage (4) qui est relié, en particulier d'une seule pièce, à la plaque de marquage respective (3),
la bande de marquage étant constituée d'au moins deux matières plastiques différentes de dureté différente, **caractérisée en ce que**
a. le contour d'encliquetage (4) de chaque élément de marquage (1) est constitué de la matière plastique plus dure, et
b. la plaque de marquage (3) est constituée de la matière plastique plus souple au moins dans la zone du champ d'inscription et/ou **en ce que** la zone de liaison (7) entre les éléments de marquage (2) est constituée, en tout ou en partie, de la zone de matière plastique plus souple.

2. Bande de marquage (1) selon la revendication 1, **caractérisée en ce que** la bande de marquage (1) est fabriquée par extrusion.

3. Bande de marquage (1) selon la revendication 2, **caractérisée en ce que** la bande de marquage (1) est fabriquée à partir d'un profilé en matière plastique obtenu par co-extrusion à deux composants.

4. Bande de marquage (1) selon la revendication 1, 2 ou 3, **caractérisée en ce que** la bande de marquage (1) avec les éléments de marquage (2) est conçue pour le marquage d'appareils électriques juxtaposables, tels que des blocs de jonction juxtaposés.

5. Bande de marquage (1) selon l'une des revendications précédentes, **caractérisée en ce que** les zones de liaison (7) entre les éléments de marquage (2) sont constituées chacune d'au moins une ou plusieurs nervure(s) de liaison (6a, 6b) et/ou **en ce que** les zones de liaison (7) présentent la même section transversale que les plaques de marquage (3), de manière à former une surface d'inscription continue sur toute la bande de marquage.

6. Bande de marquage (1) selon la revendication précédente, **caractérisée en ce qu'**au moins un trou, en particulier un trou oblong (8), est formé dans les zones de liaison (7) entre des éléments de marquage (2a, b, c) adjacents et traverse les éléments de marquage (2) dans la direction d'encliquetage perpendiculaire à leur direction de juxtaposition, le trou (8) étant formé entre les deux nervures de liaison (6a, b) et/ou le trou (8) étant conçu fermé sur son pourtour ou sous la forme d'un évidement marginal non fermé sur son pourtour.

7. Bande de marquage (1) selon la revendication précédente, **caractérisée en ce que** le trou (8) peut être utilisé comme moyen de détection pour la détection par un capteur d'une imprimante.

8. Bande de marquage (1) selon la revendication 6, **caractérisée en ce que** dans la zone située au-dessous des nervures de liaison (6a, 6b), un espace (9) est formé entre deux éléments de marquage adjacents, lequel sépare l'un de l'autre des contours d'encliquetage adjacents et **en ce que** les zones de liaison (7) sont situées au-dessus des espaces (9).

9. Bande de marquage (1) selon l'une des revendications précédentes, **caractérisée en ce que** la zone constituée de la première matière a une section transversale en forme de cuvette (en forme de U) et la zone constituée de la seconde matière plus dure est approximativement en forme de V.

10. Bande de marquage (1) selon l'une des revendications précédentes, **caractérisée en ce que** la plaque de marquage (3) est formée d'une seule pièce sur plusieurs, en particulier tous les éléments de marquage (2a, 2b, 2c) de la bande de marquage (1), de sorte qu'elle forme une surface de marquage s'étendant sur plusieurs éléments de marquage (2).

11. Bande de marquage (1) selon l'une des revendications 1 à 3 précédentes, **caractérisée en ce que** les zones de liaison (7) ne présentent pas de trou ou d'évidement et pas de fenêtre.

12. Bande de marquage (1) selon l'une des revendications précédentes, **caractérisée en ce que** le contour d'encliquetage (4) de chaque élément de marquage (2a, 2b, 2c) est constitué d'une matière plastique plus foncée que la plaque de marquage (3) et **en ce que** la plaque de marquage (3) est constituée d'une matière plastique plus claire que le contour d'encliquetage (4) ou que la plaque de marquage (3) est constituée d'une matière plastique translucide au moins dans certaines parties ou **en ce que** la plaque de marquage (3) est constituée d'une matière plastique transparente.

13. Bande de marquage (1) selon l'une des revendications précédentes, **caractérisée en ce que** l'espace (9) sépare les contours d'encliquetage (4) les uns des autres dans la zone des nervures d'encliquetage (5a, 5b).

14. Bande de marquage (1) selon l'une des revendications précédentes, **caractérisée en ce que** des nervures (17) en matière plastique plus dure, dans chacune desquelles une fente (16) est ménagée, sont prévues dans les zones de liaison (7).

15. Bande de marquage (1) selon les revendications 8 et 14, **caractérisée en ce que** la matière plastique plus dure n'est pas complètement interrompue par les espaces (9), de sorte qu'il en résulte une nervure (17) de la matière plastique plus dure, non interrompue par les espaces (9) perpendiculairement à la direction de juxtaposition, entre la plaque de marquage (3), continue sur plusieurs éléments de marquage, et les contours d'encliquetage.

16. Bande de marquage (1) selon l'une des revendications précédentes, **caractérisée en ce qu'**une nervure (17) entre deux éléments de marquage (2a, 2b, 2c) est chaque fois coupée dans la zone des nervures de liaison (6) par une fente (16) perpendiculaire à la direction de juxtaposition.

17. Procédé de fabrication d'une bande de marquage (1) selon la revendication 1, la bande de marquage (1) présentant une pluralité d'éléments de marquage (2a, b, c) reliés les uns aux autres par une zone de liaison (7), la bande de marquage (1) avec les éléments de marquage (2) étant conçue pour marquer des appareils électriques, ce pour quoi chacun des éléments de marquage (2) présente une plaque de marquage (3) avec au moins un champ d'inscription qui peut être muni d'informations telles qu'une inscription, et chacun des éléments de marquage (2) présentant, sur le côté opposé au champ d'inscription, un contour d'encliquetage (4) qui est relié, en particulier d'une seule pièce, à la plaque de marquage respective (3), la bande de marquage étant constituée d'au moins deux matières plastiques différentes de dureté différente et le contour d'encliquetage (4) de chaque élément de marquage (1) étant constitué de la matière plastique plus dure, **caractérisé par** les étapes suivantes :
a) extrusion d'une bande par co-extrusion à plusieurs composants à partir de deux matières plastiques de dureté différente de telle sorte que le contour d'encliquetage (4) de chaque élément de marquage soit constitué de la matière plastique plus dure et que la plaque de marquage respective (3) soit constituée, au moins dans la zone du champ d'inscription, de la matière plastique plus souple et que la zone de liaison (7) entre les éléments de marquage soit également constituée, en tout ou en partie, de la zone de matière plastique plus souple,
b) séparation les uns des autres des contours d'encliquetage (4) d'éléments de marquage adjacents (2a, b, c) de la bande de marquage (1).

18. Procédé selon la revendication 17, **caractérisé en ce qu'**un trou (8) est chaque fois ménagé dans la zone de liaison entre deux éléments de marquage adjacents (2a, b, c) de la bande de marquage (1) et/ou **en ce que**, entre l'étape de procédé a) et l'étape de procédé b), un affaiblissement de matière est chaque fois effectué dans la zone de liaison entre deux éléments de marquage adjacents (2a, b, c) de la bande de marquage (1).

19. Procédé selon la revendication 17 ou 18, **caractérisé en ce qu'**une fente (16) est ménagée dans la matière plastique plus dure dans la zone de liaison entre deux éléments de marquage adjacents (2a, b, c) de la bande de marquage (1).
